(19) Europäisches Patentamt
European Patent Office
Office européen des brevets

(11) Veröffentlichungsnummer: **0 339 395 A1**

(12) **EUROPÄISCHE PATENTANMELDUNG**

(21) Anmeldenummer: **89106694.6**

(51) Int. Cl.4: **C08G 65/38 , C08G 65/48**

(22) Anmeldetag: **14.04.89**

(30) Priorität: **27.04.88 DE 3814166**

(43) Veröffentlichungstag der Anmeldung:
**02.11.89 Patentblatt 89/44**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Mayska, Paul Johannes, Dr.**
**Bodelschwinghstrasse 18**
**D-4150 Krefeld(DE)**
Erfinder: **Bottenbruch, Ludwig, Dr.**
**Woehlerstrasse 5**
**D-4150 Krefeld(DE)**
Erfinder: **Dicke, Hans-Rudolf, Dr.**
**Kaiserswerther Strasse 48**
**D-4150 Krefeld 12(DE)**

(54) **Thermisch stabiles Polyphenylenoxid(PPO).**

(57) Die Erfindung betrifft ein neues, thermisch stabiles Polyphenylenoxid (PPO) der Formel

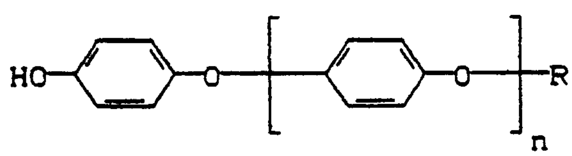

(I),

worin
n für eine ganze Zahl von 20 bis 500 und
R für $C_1$-$C_{10}$-Alkyl- und $C_6$-$C_{24}$-Arylreste steht
sowie seine Verwendung als thermoplastischer Werkstoff.

EP 0 339 395 A1

## Neues thermisch stabiles Polyphenylenoxid (PPO)

Die Erfindung betrifft ein neues, thermisch stabiles Polyphenylenoxid (PPO) sowie seine Verwendung als thermoplastischer Werkstoff.

Das erfindungsgemäße Polyphenylenoxid entspricht der Formel (I)

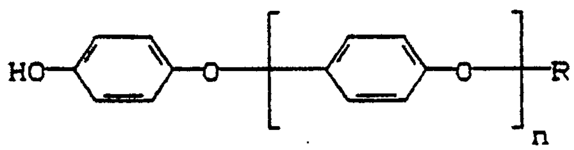

(I),

worin

n für eine ganze Zahl von 20 bis 500 und

R für $C_1$-$C_{10}$-Alkyl- und $C_6$-$C_{24}$-Arylreste steht.

Bevorzugte Polyphenylenoxide entsprechen der Formel (II)

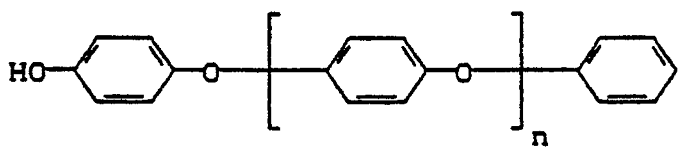

(II),

worin

n für eine ganze Zahl von 50 bis 500 steht.

Die Herstellung der Polyphenylenoxide erfolgt analog bekannten Verfahren ausgehend von entsprechenden p-Halogenphenolen, z.B. nach Ullmann. Bekannte, geeignete Herstellungsverfahren sind z.B. in der FR-PS 1 301 174, in den US-PS 3 228 910, 3 491 058, 3 507 832, 3 455 736, von H.M. van Dort et al., Europ. Polym. Jr. 4, 275 (1968), Erich Behr, "Hochtemperaturbeständige Kunststoffe" (Carl-Hanser-Verlag, München, 1969) usw. beschrieben.

Bei diesen Verfahren erfolgt die Herstellung von Polyphenylenoxiden, ausgehend von p-Halogenphenolaten. Die so hergestellten Verbindungen sind thermisch zumeist instabil. Schon beim Lösen, z.B. in NMP, geliert die Lösung. Auch nach Aufschmelzen bei 290°C unter Stickstoff (5 min) können die Polymeren nicht in NMP (N-Methylpyrroidon) gelöst werden.

Es wurde nun gefunden, daß man thermisch stabiles PPO herstellen kann, wenn in diese bestimmte Endgruppen eingeführt werden.

Die Einführung der Endgruppe geschieht bevorzugt durch Umsetzung von PPO mit Alkalimetallsalzen z.B. von aliphatischen und aromatischen Hydroxiverbindungen, z.B. Alkoholen wie Methanol, Ethanol, Phenol, p-Anisol usw.

Das mit Alkholaten modifizierte PPO zeigt z.B. bei hohen Temperaturen, (z.B. 290°C, 5 min unter Stickstoff) eine verbesserte Stabilität und ist nach Erhitzen auf hohe Temperaturen in 5%iger Lösung in siedendem NMP noch klar löslich.

Die erfindungsgemäße Einführung von nicht funktionellen Gruppen tragenden Endgruppen kann auch in Anwesenheit von üblichen Verzweigern durchgeführt wie 1,3,5-Trihydroxybenzol (Phloroglucin), 1,3,5-Tribrombenzol, 1,3-Dibrom-5-hydroxbenzol erfolgen, analog bekannter Verfahren.

Die erfindungsgemäßen Verbindungen finden Verwendung als Thermoplaste und können nach bekannten Verfahren zu Fasern, Folien, Formkörpern, Halbzeugen usw. verarbeitet werden.

Sie können alleine oder als Mischungen mit anderen Thermoplasten verwendet werden. Als Mischungspartner seien beispielhaft andere Poly-arylether, Polyester, Polycarbonate, Polyarylate, Polyetherimide, Vinylpolymerisate, Polyamide usw. genannt.

Die Mischungen können 5-95 % der erfindungsgemäßen Polyphenylenoxide enthalten.

Die erfindungsgemäßen Polyphenylenoxide können weiterhin übliche mineralische Füllstoffe, z.B. Kreide, Siliciumoxid, Glaskugeln, Glaspulver, Aluminium, Ton, Fasern wie Glas- oder Carbonfasern usw. alleine oder als Mischungen enthalten. Weiterhin können sie mit üblichen Pigmenten (Titandioxid), thermischen Stabilisatoren (Zinkoxid), UV-Stabilisatoren, Weichmachern usw. abgemischt werden.

Beispiel 1: Herstellung von Polyphenylenoxid mit je einer reaktiven Endgruppe an den Kettenenden

a) Herstellung der Ausgangsverbindung, p-Natrium-bromphenolat

400,0 g (2.31 mol) p-Bromphenol werden unter Stickstoff in 200 ml Methanol gelöst. Dann werden 201,3 g (2,26 mol) 45 %ige Natronlauge zugegeben. Die Mischung wird erhitzt und ca. 200-300 ml Methanol/Wassermischung werden abdestilliert. 500 ml Toluol werden zugegeben und das restliche Wasser azeotrop abdestilliert. Das Salz fällt aus. Die Mischung wird abgekühlt und unter Stickstoff über eine G-3-Glasfilternutsche abgesaugt. Der Feststoff wird zweimal mit Cyclohexan gewaschen und im Hochvakuum bei 60 °C getrocknet.

| $C_6H_4BrNaO$ | th. | Gef. |
|---|---|---|
| C | 36,96 | 36,8 |
| H | 2,07 | 2,30 |
| O | 8,20 | |
| Na | 11,79 | 12,3 |
| Br | 40,98 | 40-42 % |

b) Herstellung des phenolterminierten PPO durch Umsetzung von PPO mit Natriumphenolat:

In einem 500 ml Dreihalskolben werden 84,5 g Diphenylsulfon unter Stickstoff chargiert und auf 150 °C aufgeheizt. Bei dieser Temperatur werden 100 mg Cu(I)Cl in 6 ml Pyridin zugegeben und anschließend auf 180 °C erhitzt. Bei dieser Temperatur werden noch 27,3 g (0,144 mol) p-Natriumbromphenolat und 0,99 g (6 Mol-%) Natriumphenolat zugesetzt. Es wird 4 Stunden bei 195 °C gehalten und nach dem Abkühlen aus Aceton/Isopropanol gefällt. Das Produkt wird abgesaugt, mit destilliertem Wasser neutral gewaschen. Anschließend wird es im salzsauren Methanol (2:1) 2 Stunden am Rückfluß gekocht, neutral gewaschen und getrocknet. Ausbeute: 9,3 g (71 %)
Schmelzpunkt: 260 °C

Beispiel 3 (Vergleichsbeispiel) Herstellung eines PPO ohne Endgruppen:

p-Bromphenolat wird wie im Beispiel 1b ohne Zusatz des Natriumphenolats polymerisiert. Ausbeute: 10,6 g (81 %)
Schmelzpunkt: 250 °C

Beispiel 4

Bestimmung der thermischen Stabilität

Je 1 g Substanz wird in 50 ml Kolben eingewogen und unter Stickstoff für 5 min ein 290 °C heißes Salzbad gestellt. Nach dem Abkühlen wird das Produkt zerkleinert und die Löslichkeit in heißen NMP geprüft.

| | Löslichkeit vor dem Tempern | Löslichkeit nach dem Tempern |
|---|---|---|
| mit Endgruppe (Bsp. 1b) | 5 % klar löslich | 5 % klar löslich |
| ohne Endgruppe (Vergleich) | geliert beim Lösen | Löslichkeit unter 1 % |

**Ansprüche**

1. Polyphenylenoxide der Formel (I)

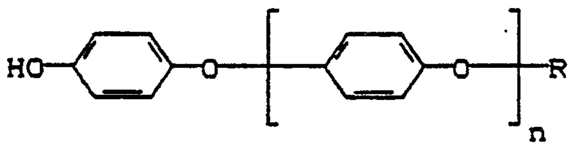

(I),

worin
n für eine ganze Zahl von 20 bis 500 und
R für $C_1$-$C_{10}$-Alkyl- und $C_6$-$C_{24}$-Arylreste stehen.

2. Polyphenylenoxide der Formel (II)

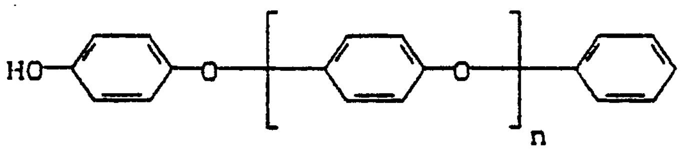

(II),

worin
n für eine ganze Zahl von 50 bis 500 steht.

3. Verwendung von Polyphenylenoxiden der Formel 1 zur Herstellung von geformten Körpern.

Europäisches Patentamt

# EUROPÄISCHER RECHERCHENBERICHT

Nummer der Anmeldung

EP 89 10 6694

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 645 263 (SUN OIL CO.)<br>* Anspruch 6 *<br>--- | 1-3 | C 08 G 65/38<br>C 08 G 65/48 |
| X | EP-A-0 115 641 (BAYER AG)<br>* Seite 8, Formel II *<br>--- | 1,2 | |
| X | DE-A-1 720 829 (GENERAL ELECTRIC)<br>* Seite 3, Absatz 1 *<br>--- | 1,2 | |
| A,D | US-A-3 507 832 (H. DAVIS et al.)<br>* Ansprüche *<br>----- | 1-3 | |

RECHERCHIERTE SACHGEBIETE (Int. Cl.4)

C 08 G 65/00

Der vorliegende Recherchenbericht wurde für alle Patentansprüche erstellt

| Recherchenort | Abschlußdatum der Recherche | Prüfer |
|---|---|---|
| BERLIN | 17-07-1989 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)